# EUROPEAN PATENT APPLICATION

(11) **EP 2 237 144 A1**
(43) Date of publication of application: **06.10.2010**
(21) Application number: 09250965.2
(22) Date of filing: 31.03.2009
(51) Int. Cl.: G06F 3/06

(54) **Method of remotely storing data and related data storage system**

(71) Applicant: BRITISH TELECOMMUNICATIONS public limited company, London EC1A 7AJ (GB)
(72) Inventor: Defoort, Steven, B - 2800 Mechelen (BE)
(74) Representative: Lofting, Coreena Fiona Anne

(57) **Abstract**

A data storage system comprises means to receive a storage request for a data file from a requesting entity, the storage request being associated with an identifier for the requesting entity, means to determine a first data identifier for the data file for which storage is requested, said first identifier uniquely characterising the content and content characteristics, means to compare the first data identifier with stored one or more other data identifiers, and means to store in association with said identifier for the requesting entity, a link to a storage location of previously stored data in the event of a match for the first data identifier with one of said one or more other data identifiers being determined by said comparison means.

## Description

The present invention relates to a data storage system which uses data identification for reducing the storage of duplicated data and in particular but not exclusively to a method of managing and system for the storage of duplicated data and related aspects.

As more and more data is generated on a computer, a user will often create a copy of either all or selected data, known as a "back-up" so that in the event of accidental loss or damage to data stored on the computer, the "backed-up" copy of the deleted/damaged data can be retrieved to replace the deleted/damaged version. This is particularly so if the data is commercially or personally important or valuable, for example, if it relates to legal documentation, or sentimental photographs, or was downloaded at cost to the user.

Media content data such as audio/video/text content data etc typically comprises music, photographs/films/books etc is often particularly valued by the content consumer, regardless of whether it was generated by the user or provided free of charge or at cost from a third party. Protecting media content data from accidental deletion and/or file damage is frequently implemented by users creating back-ups either using a separate local storage device or by using a remote back-up service. In addition, as such media content data typically comprises files which are relatively large, often the media content itself will be stored on a separate disk or other memory device to free up space on the user's machine and/or stored remotely on a remote data storage site.

Known back-up services are used to remotely store copies of content data also stored on a user terminal and are especially popular for storing content data files which are large, i.e., data which has a large volume media format such as photographs, videos and music files etc. Such back-up services tend to upload a complete copy of the file into the network servers and keep it there until a user retrieves it.

Conventionally, remote storage service providers allocate a pre-determined amount of storage capacity to each service subscriber. For example, a subscriber may be allocated 50Gigabytes of remote storage. As the number of service subscribers increases, the size of the storage facility increases. This frequently results not only in an increase in the physical amount of data storage disk capacity that the storage service provider must maintain but also increases the amount of electrical power required to maintain the storage facility etc.

Where the data which is being uploaded for remote backup comprises a local copy of content which was downloaded originally from a remote server to a user's personal computing device, the storage facility will store each uploaded copy of that content separately. As a number of users may download the same data and create back-up copies these result in duplicate copies of the same content being stored on the remote storage facility.

Moreover, storing or copying a large file held on a client terminal which a user operates to a remote data storage site is usually quite time consuming and tedious for the user. This is especially so if a connection is used which is asymmetric in that it provides a low data transmission rate in the direction between the location of the user's client terminal and the local exchange over the access network (the direction used for up-loading content) in contrast with the transmission rates offered in the direction for downloading content (which currently describes the majority of broadband connections implemented using Asynchronous Digital Subscriber Line (ADSL) technology). Where mass-distributed content data such as a video or audio file (e.g. a film or music track) is stored locally, generating a remote back-up duplicates content already available for download over the internet. However, as some content data may be provided for cost, a user will nonetheless wish to ensure they have backed up their copy of the content data to avoid the need to pay for a duplicate copy in the event their local copy is damaged or accidentally deleted etc. This may be desirable to a user even if they have set up a back-up facility with the content distributor, as if content from a plurality of distribution sources is stored locally on the user's computer terminal, this would require managing a plurality of different back-up operations, instead of a single back-up operation.

Several techniques are known in the art which provide document identifiers which uniquely identify documents including mixed media documents, and also for uniquely identifying files including files comprising various media and mixed media content.

For example, US2006101069 entitled "Generating a Fingerprint for a Document" describes how a fingerprint can be generated for a document based on certain elements or features of the document and US 2006/0285172 entitled " Method and System for Document Fingerprint Matching in a Mixed Media Environment" describes a scheme for uniquely identifying documents which contain certain types of media content. Similarly music tracks and albums, images such as pictures and photographs, and videos such as films and television programs etc., are all capable of being uniquely identified when stored in electronic form.

The aspects of the invention as set out herein below and by the accompanying independent claims may be suitably combined with each other and with one or more embodiments of the invention as set out herein below and by the accompanying dependent claims in any suitable manner known to one of ordinary skill in the art.

One aspect of the invention relates to a data storage system comprising:
means to receive a storage request for a data file from a requesting entity, the storage request being associated with an identifier for the requesting entity;
means to determine a first data identifier for the data file for which storage is requested, said first identifier uniquely characterising the content and content characteristics;
means to compare the first data identifier with stored one or more other data identifiers;
means to store in association with said identifier for the requesting entity, a link to a storage location of previously stored data in the event of a match for the first data identifier with one of said one or more other data identifiers being determined by said comparison means.

The system thus avoids any storage of duplicated content data regardless of whether the data is duplicated due to its previous storage on the server by the same user or by another user.

The storage request may comprise said first data identifier and said means to determine said first data identifier may process said request to extract said first data identifier.

The storage request may comprise one or more data label characteristics and associated values and said storage system may further comprise means to generate said first data identifier from said data label characteristics.

The link to a storage location may point to a location in memory controllable by said storage system.

The link to a storage location may point to a location in memory controllable by another entity.

An aspect of the invention relates to a method of managing a data storage system, the method comprising:
receiving a storage request for a data file from a requesting entity, the storage request being associated with an identifier for the requesting entity;
determining a first data identifier for the data file for which storage is requested, said first identifier uniquely characterising the content and content characteristics;
comparing the first data identifier with stored one or more other data identifiers; and
in the event of a match for the first data identifier with one of said one or more other data identifiers being determined by said comparison,
storing in association with said identifier for the requesting entity a link to a storage location of previously stored data.

The storage request may comprise said first data identifier and the method may further comprise processing said request to extract said first data identifier.

The storage request may comprise one or more data label characteristics and associated values and the method may further comprise:
generating said first data identifier from said data label characteristics.

The storing step may store the link to a storage location which points to a location in memory controllable by said storage system.

The storing step may store the link to a storage location which points to a location in memory controllable by another entity.

Another aspect of the invention relates to a computer terminal comprising:
means to generate a request for storing a document on a data storage system aspect of the invention.

Another aspect of the invention relates to a suite of one or more computer programs arranged in use when executed loaded on appropriate computer platforms to implement steps in a method aspect of the invention.

One aspect of the invention seeks to relate to a data storage system comprising:
means to receive a storage request for a data file from a requesting entity, the storage request being associated with an identifier for the requesting entity;
means to determine a first data identifier for the data file for which storage is requested, said first identifier uniquely characterising the content and content characteristics;
means to compare the first data identifier with stored one or more other data identifiers; and
means to search other data servers controllable by other parties for content data having a matching data identifier,
means to associate the storage address of said matching content data located by said search with said data identifier;
means to provide in a storage area associated with the requesting entity, a link to the storage address of the matching content data.

The matching data content may be copied to a storage location controllable by said data server, and wherein the storage address of said matching content data comprises an address located in memory controllable by said storage system.

The link to a storage address may point to a location in a data store to which access is controllable by the other entity.

The request to store data may comprise a request by a client terminal to store a copy of content data which was authorised by said other entity for download to said client terminal.

Another aspect of the invention relates to a method of processing a request by a terminal to store data on a data storage system, the method comprising:
receiving a storage request for a data file from a requesting entity, the storage request being associated with an identifier for the requesting entity;
determining a first data identifier for the data file for which storage is requested, said first identifier uniquely characterising the content and content characteristics;
comparing the first data identifier with stored one or more other data identifiers; and
searching search other data servers controllable by other parties for content data having a matching data identifier,
associating the storage address of said matching content data located by said search with said data identifier;
providing in a storage area associated with the requesting entity, a link to the storage address of the matching content data.

The method may further comprise the steps of:
copying said matching data content from its source storage location to an address in a storage location controllable by said data server,
   whereby the storage address of said matching content data comprises said address.

The embodiments of the present invention thus seek to provide a data storage system that addresses the limitations known in the art of remote data storage facilities by providing a remote storage facility that reduces the amount of data storage required on the remote storage facility and which does not require data to be uploaded to generate a remotely stored copy of that data. The invention requires files which are stored on a server to be associated with a digital "fingerprint" which unique identifies the content of the files (and which is independent of the origin and/or file name of the stored files). The fingerprint may be generated using any suitable technique known in the art, for example, any technology which is appropriate for a particular type of file and/or file content may be used. As such, in a data storage scheme according to the invention, several different techniques may be used for different types of media content, e.g. a different technique may be used to fingerprint photographic images from that used for fingerprinting music, however, all techniques are used consistently for all received data. This enables the storage system according to the invention to be able to identify when duplicate content is being proposed for storage.

The embodiments of the invention seek to examine the data content as a whole of a particular file and determines a fingerprint based not just on the content but on the characteristics of the content. As such, for example, a document which contains text having a particular typeface and typographic layout which includes an image having a certain dimension and resolution would not have the same document "fingerprint" as another document containing the same text in the same typeface which included same image having the same dimensions and resolution if in this document the text had a different typographic layout or the image was located in a different part of the document, even if the overall file size was the same.

As such a data file's "fingerprint" uniquely identifies the content and content characteristics of a data file.

Methods such as file deduplication are known in the art to examine content addressable storage to examine documents on a word by word basis for example, see "Content-Addressable Memory (CAM) Circuits and Architectures: A Tutorial and Survey" by Kostas Pagiamtzis and Ali Sheikholeslami, p. 712, IEEE Journal of Solid-State Circuits, Vol. 41, No. 3, March 2006. Similarly, methods such as data deduplication techniques which examine data on the block level to eliminate redundant data blocks. However, these techniques may not locate the correct document under all circumstances as it is not only the content data but the characteristics of the content data that must match for duplicated content data to be identified correctly.

Embodiments of the invention will now be described with reference to the accompanying drawings which are by way of example only and in which:
Figure 1 shows a data storage system according to an embodiment of the invention;
Figure 2 shows schematically a data file linking system for the data storage system shown in Figure 1; and
Figure 3 shows steps in a method of storing data according to an embodiment of the invention.

Exemplary embodiments of the invention including the best mode are discussed in detail below. In describing embodiments, certain features well known to those of ordinary skill in the art may be omitted and other features described only using specific terminology for the sake of clarity. However, the invention is not intended to be limited only to the features explicitly described herein. All specific exemplary embodiments are discussed for illustration purposes only and a person skilled in the relevant art will recognize that other components and configurations can be used without parting from the spirit and scope of the invention.

The term "storable data" is used herein to refer to any type of data storable in a file format including, but not limited to: computer program files (in whatever appropriate format, including source and executable versions) for example, electronic games and other user interactive applications, and content data which a user consumes passively such comprising text and/or audio and/or video, such as for example, journal articles, books, music, television and audio data etc. The term "database" is used here as a synecdoche for various alternative data formats.

Such data may be generated on a user's client terminal (by which term we refer to any suitable computing platform including but not limited to: a personal computer or mobile communications type device such as laptop or personal digital assistant or mobile telephone), for example, configured desktop computer, a set-top box for decoding broadcast services such as television programmes and providing electronic programme guide information, a video recording facility, a music file player, a games console, and/or a mobile communications device such as a mobile telephone or personal digital assistant or the like and data may comprise personal data, for example, a photograph or financial information etc as well as mass-distributed content data. Examples of mass-distributed content include, for example, games, music tracks and videos such as films and/or television episodes which is also stored remotely by a content distributor and available for download to more than one location.

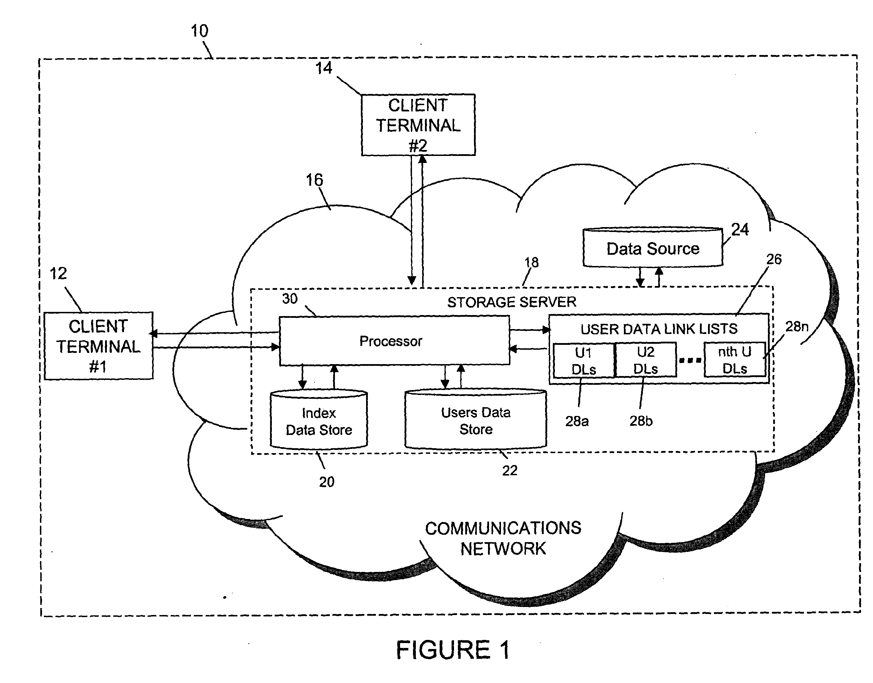

Figure 1 of the accompanying drawings shows a data storage system 10 comprising a plurality of client terminals 12, 14 arranged to connect to a remote storage server 18 via a communications network 16 according to an embodiment of the invention. The storage server 18 shown in Figure 1 comprises at least one appropriately configured data processor 30 which performs various data processing functions, a data index database 20, a user data storage area 22, and a user data linked list database 26. Also shown is an exemplary external data source 24 with which the storage server 18 is capable of communicating.

An example of suitable data processing means 30 comprises a central processing unit (CPU) not shown having appropriate data input and output means and access to appropriate dynamic and static memory.

The data index database 20 comprises a plurality of data index records, each data index record associating an item of storable data with an index value referred to herein as a data identifier (DataID). In one embodiment of the invention, a DataID index value comprises a data fingerprint. The data fingerprint unique identifies the content of the data stored and may be determined by any suitable method known in the art, for example, by the process described in United States Patent Application No. US2006101069 and/or United States Patent Application No. US 2006/0285172 and/or by processing the content of a data file to extract one or more identifiable data label characteristics such as a "title", "author", "version", "edition", "date of publication", "data source", word by word comparison, image characteristic such as a colour characteristic, resolution, encoding technique, etc and/or other data label characteristics such as editable version, file extension, etc etc.

The data storage facility implements a consistent data storage identification indexing scheme for all the documents that it stores. Accordingly, unless a document identifier comprises a DataID used by the data storage system of an embodiment of the invention, it will be ignored and a new DataID is generated for the data which is to be stored using the data storage system.

In one embodiment of the invention, the data characteristics are extracted automatically from the document which is to be stored on the data storage server. The automatic extraction of data characteristics is performed either on the client terminal or on the storage server.

In an embodiment of the invention in which one or more the data characteristics are extracted by the data storage server upon receipt of data for storage, the associated DataID which uniquely identifies the content of the data to be stored is generated automatically from the data characteristics.

In other embodiments of the invention, the values for the data label characteristics are determined on the client terminal 12. The values for the data label characteristics are either generated automatically by running a suitable computer application on the client terminal which a user provides an indication of the data to be remotely stored to, such as the file name, or alternatively, a computer application runs on the client terminal which prompts the user to enter at least one data characteristic for the data, for example, the title and/or media type etc. In these embodiments, when a user generates a request for remote storage of data, the request is associated with the characteristics of the data and the storage server which receives the request initially determines from the data label characteristics of the data provided with the request a DataID. Alternatively, the DataID is determined by the client terminal based on the values and type of the data label characteristics, in which case the request for remotely storing data at the server includes the DataID.

The DataID is generated from the values of the data label characteristics and/or type of data label characteristics, which may be determined either on the client terminal and/or on the data storage server. Independent of the location of where the data label characteristics are determined, and/or where the DataID is determined, the process of generating a DataID provides a document "fingerprint" which results in a consistent DataID for the same "data content". In a preferred embodiment of the invention, the fingerprint is determined independently of any user assigned file name, especially for example, the file name prefix (although a different file name extension produce a different DataID). For example, consider the case where john123123.doc contains the text of a book entitled "A Book Title" by "An Author". In a preferred embodiment of the invention, this will john123123.doc has the same DataID as jack123123.doc where jack123123.doc also contains the book entitled "A Book Title" by "An Author" where the text and document format and all other data characteristics are the same for both contents and the only difference is that one version is stored on John's client terminal as john123123.doc and the other is stored on Jack's client terminal as jack123123.doc. However, if John had stored his version as a .pdf file, this would possibly have a different DataID than the DataID for the .doc version of that file.

The data storage system according to an embodiment of the invention and as shown in Figure 1 of the accompanying drawings stores a list of the DataIDs of the data stored in a content index data store or data base 20. The index data store 20 stores the DataIDs of all the user's stored data files, so that when a new data storage request is received from a user, the request can be processed to determine if the DataID of the data proposed for storage already matches a DataID of data already stored in User Data Store 22.

In the case where a DataID for the data in a request for storage does match a method of managing storage of duplicated data is implemented in accordance with an embodiment of the invention as described in more detail herein below.

In order to implement such a method, the data storage system in Figure 1 comprises a data store 26 which contains data structures which record the data links of each document stored for each user of the storage system. In one embodiment, the data store 26 comprises a user linked list database 26 in which records are provided for each user identity (and/or equivalently client terminal identity) which associated with that identity a list of links to the storage location of the associated data items, for example, a list may contain pointers to the appropriate addresses in memory of files which are stored in the local data storage facility 22 of the data storage system 10. Here the term "local" is mean in the context of being locally accessible to the data storage server 18, i.e., under the same domain of control as the data storage server 18 which, if the data storage server is implemented in a distributed manner may in fact be at a location which is physically/geographically remote from the data storage server 18 location.

As shown schematically in Figure 1, the user data link database 26 comprises a plurality of user data list records U1DL ...UnDL, shown as 28a...28n in Figure 1. Each user data list record 28a...28n comprises an index value, for example a user identity (UserID), in association with a plurality of links to storable data items. Each link comprises a DataID index value which identifies the storable data item and a pointer to the appropriate memory location of the storable data item with that DataID index value in the user data storage area 22. In this way, whilst user data storage area 22 comprises a communal data storage facility, each user is able to securely identify their own data and only data which is associated in a user data list record with a particular UserID is retrievable from the communal user data store 22 by the user having that UserID. In practice, the UserID is either associated with a specific subscriber and/or with a specific client terminal device 12,14.

Also shown in Figure 1 is another source of data, data source 24, which the data storage server 18 locate data on when trying to determine if data corresponding to a DataID in a storage request exists in a location other than on the requesting client terminal 12.

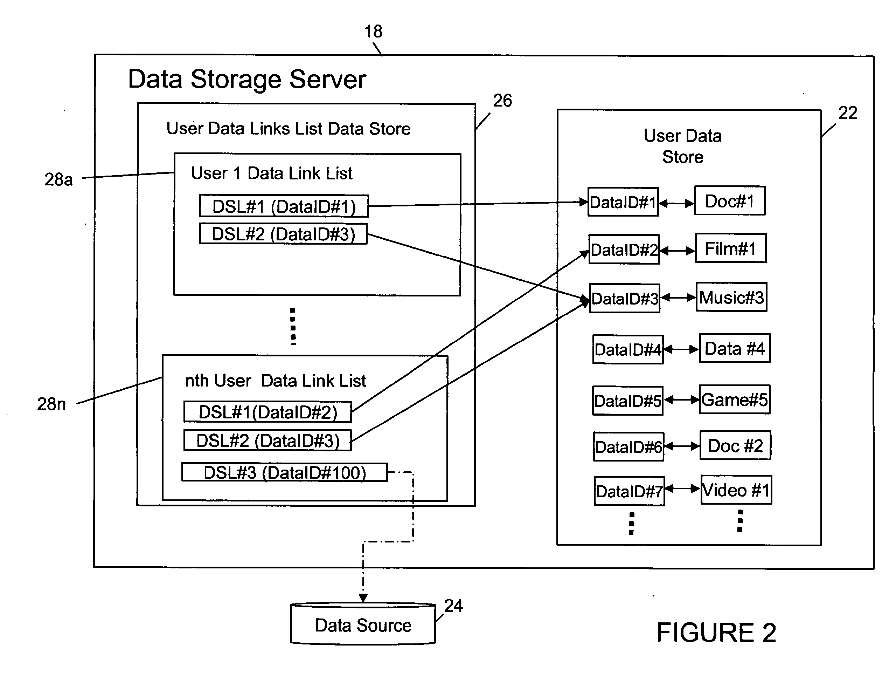

Figure 2 shows in more detail a data linked data storage scheme implemented using data server 18 according to an embodiment of the invention. In Figure 2, the user data links list data store 26 is shown comprising a plurality of records data storage link (DSL) lists for a plurality of users, 1...n, of which only the records for the first and nth user are shown.

The data record for UserID#1, shown as User 1 Data Link List in Figure 2, comprises just two links to storable data in this exemplary embodiment of the invention, links DSL#1 and DSL#2. The link DSL#1 points to the memory location of the storable data item with the DataID index value #1, whereas the link DSL#3 points to the memory location of storable data item DataID index value #3.

The data record for UserID#n, shown as nth User Data Link List in Figure 2, comprises three data links DSL#1, DSL#2, and DSL#3. Here the first link for the nth user DSL#1 points to the memory location of storable data item with the DataID#2 and the second link is DSL#2 which points to the storable data item which is identified by DataID#3. The final data link is DSL#3, which points to DataID#100 which in fact is points to an off-server storage location, shown in Figures 1 and 2 as data store 24. This DataID#3 in this embodiment contains a link directly to the storage location of the data on the data source 24. This requires the cooperation of the operator of the data source 24 to ensure that the link maintains its integrity and accurately points to the same date with that DataID. For this reason, it is preferred to copy all data located on remote data sources to the user data store 22 where its storage location is controllable by the data storage server 18.

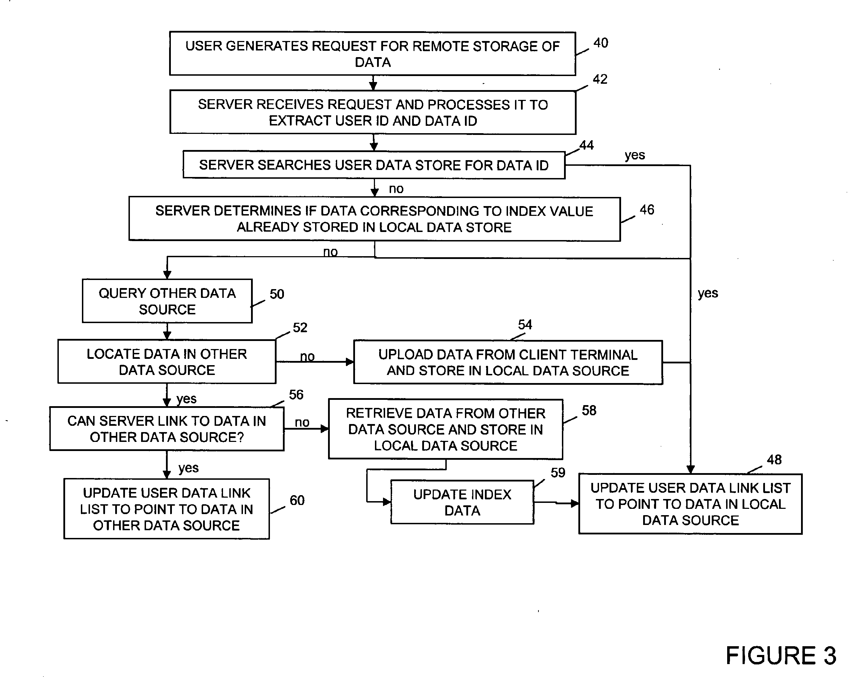

As Figure 2 clearly shows, here both the first and nth user want to store duplicated data with the same DataID#3. In the exemplary embodiment of the invention shown in Figure 3, the DataID#3 identifies uniquely a music track. Thus, instead of storing the same music track twice on the server's user data store 22, just one copy is held and a link is established to that copy for both user 1 and the nth user. As the data having the DataID#3 which the nth user and first user which to create a stored copy of is the same, both user's link lists contain a link which points to the same memory location in the user data store 22. This enables the data storage server to reduce the number of duplicate copies of the same data item being stored.

Although shown in a sequential listing by UserID value in Figure 2, those of ordinary skill in the art will appreciate that in other embodiments of the invention the data records in the User Data Links List data store 26 may be arranged non-sequentially by UserID. Each DSL points to a location in memory where the corresponding data item is stored, which in Figure 2 is a memory area in User Data Store 22 for DSL#1,DSL#2 and DSL#3. However, DSL#3 for user "n" is a link which points to a data store which is not within the domain of control of the storage server 18. Instead, DSL#3 points to remote data store 24. For example, the data store 24 may administer a content data distribution scheme in which subscriber's obtain content data only if suitably authorised. In this case, the storage server 18 does not store a copy of the corresponding storable data item locally, but instead generates a link to the remote data item with that DataID on the remote server, for example, a url may be provided.

Accordingly, in the exemplary embodiment shown in Figure 2, the communal User Data Store 22 comprises a plurality of storable data items which are retrievable using their respective DataIDs.

A method of storing duplicate data will now be described with reference to Figure 3 of the accompanying drawings, but in which like elements retain the numbering scheme of the previously described embodiments.

In Figure 3, a user generates a request for remote storage of data (step 40) on the client terminal 12 shown in Figure 1. The request is sent to storage server 18 which is arranged to receive requests for data storage of storable data from a plurality of client terminals 12, 14 as shown in Figure 1. Client terminals 12,14 comprise any suitable computing platform having appropriate communications means to interface with the storage server 18 over the communications network 16 shown in Figure 1 by generating requests which identify data for which a remotely retrievable copy is to be stored. Client terminal 12 runs an application which determines from the data in respect of which the storage request is generated a set of data labels for characteristics of the document and associated values. The storage request contains the set of data labels and values and when received by storage server 18, the values are extracted and processed by the storage server to generate a DataID for the data for which storage has been requested. In another embodiment of the invention, (not shown in Figure 3) the application running on the client terminal 12 uses the data label values to generate the DataID on the client terminal 12 and sends the DataID in the request to the storage server 12, which enables the storage server to extract both the user/terminal identifier USERID and the DATA ID (step 42) directly from the request.

The storage server then performs a check to determine if that user has previously stored a copy of that data on the storage server (step 44) as may happen when a user repeated performs a back-up of data stored on the client terminal 12 but perhaps has is now referred to the data by a different file name. In this case, the user link list will now be updated to point to the location of the file with the same data in the user data store 22 (step 48). In the case where the user has asked for a file to be stored by a different file name in the request, the file name will be stored in the user linked list independently of the fact that the actual data is already stored. For example, a user may want to store a copy of a film which on their computer is stored as "favoritefilm.mov" whereas previously they kept a local copy which was stored as "titleoffilm.mov" (or perhaps the data content itself may have the same file name but now be stored in a different location on the user's client terminal, i.e., have a different path. In this case the request to store same data with the new file name "favoritefilm.mov" will result in an update to the user's list of links to data by file name, i.e., the DSL for "favoriteflim.mov" will point to the same location as the DSL for "titleoffilm.mov" for that user so that if the user tries to retrieve the data stored under either file name they will retrieve the same actual content.

In the case where the user has not previously stored a copy of that data content, the server determines if anyone else has. For example, if another terminal has uploaded a copy of the same data content or if the data content is available from another server (e.g. data source 20).

First the server determines if data corresponding to that Data ID is stored in the index data store, if it is then it has been previously the subject of a request for storage (either by the same user/client terminal or by another user/client terminal) (step 46). In this case the user link list for the new data storage request is simply updated to point to this storage location (step 48). The request for storage is responded to by the server acknowledging the request and providing an indication of the DataID to the user for subsequent document retrieval. A user is then able to access the data by simply sending in a data retrieval request which contains the DataID. When a data retrieval request is processed by the server 18, a lookup operation is either performed on the Index Data store 16 which points directly to the location of the data in the user data store 22 or to an external data source 24 and/or the storage server may query the user link lists directly for a link to a document with the DataID, which results in the storage server retrieving the associated document and forwarding to the client terminal 12.

Advantageously, therefore, by implementing a document storage system according to the invention, in the case where storage of duplicated and previously stored data is requested, the method of storing data according to the invention detects the duplication of the data and so removes the requirement for a user to upload the data which has been previously stored. This greatly improves the speed at which a user is able to make back-up copies of data as there is no need to physically transfer the data to the remote storage site.

If, however, the data is not stored already locally, the storage server will send out a query to other data sources (step 50). For example, a search query could be generated automatically for the document based either on the DataID or on the values of the one or more data labels. If data is not located at step 52, then data is uploaded from the client terminal 12 and stored in the data store 22 (step 54) and the user link list updated accordingly (step 48). If another server is located storing the data in step 52, then if the data cannot be linked to directly, the data is retrieved from that data source and stored locally in the user store 22 and the user link list updated (step 58) according to contain a pointer to this location for the data with the DATA ID and the index for DATA IDs is also updated (step 59).

If in response to querying alternative data sources it is possible to generate a link directly to the storage location of the data on the remote data source in step 58, then the user data link list is updated to point directly to data in the other data source (step 60). This saves storage space on the storage server system, but is at the cost of having less control over how reliable the link is to the external data source.

Thus, according to the embodiments of invention, when the processing means 30 of data storage server 18 receives a request from a client terminal 12 to store storable data, the request is processed (step 42) to determine at least two request characteristics:
i) a user identifier UID (which may in practice be associated with either a subscriber to the storage service or with a particular client terminal (or with a set of one or more client terminals/user devices which a particular subscriber has associated with a data storage service account); and
ii) a data identifier DataID for the storable data, the DataID uniquely identifies the content of the data for which storage is being requested.

If a DataID is not received with the request, a DataID is generated by the storage server 18 using one or more data label characteristics.

Accordingly, content data in particular, a particular film, television programme or music track, may be characterised by its DataID and stored only once on the data storage server regardless of however many users request copies of the same content data are stored. Each user's request to store the data simply results in the links list for that user's UID being updated and a link to the storage location of that data in either the communal data storage server's user data store 22 or, where it is possible to a third party data store 24, for example, to a data store that a content provider/distributor may enable the data storage server to access.

In an exemplary embodiment of a method of managing data storage according to the invention, a user of client terminal 12 wishes to remotely store a copy of local content data, for example, a local copy of an electronic document D1 such as may be generated using a word processing application and/or scanner etc. The term "local copy "means a copy of the relevant content data file which is stored locally to the client terminal, for example, which exists in data storage means/memory provided on the client terminal 12.

In one embodiment of the invention, the user of the client terminal launches the data storage application which runs in foreground and subsequently selects using the storage application user interface an identifier for a data file D1 referred to herein also by the term "data fingerprint" or "document fingerprint" where the "fingerprint" uniquely identifies the data which the file relates to . Alternatively, the data storage application runs in background and is activated by a user selecting a data file, for example, a document, and then subsequently activating the data storage application on the client terminal by clicking on an input menu which offers the user an opportunity to create a remote back up for example.

Once the user has selected a data file for remote back-up an identifier DATAID for that data is determined from the data label characteristics. For example, if the data file comprises a document the DATAID may generate a fingerprint (a unique identifier) from the ISBN of the document or from another type of document signature and/or using the original data source, such as for example, a particular web-address for the data source. In the later case, the DATAID may be generated from a data label characteristic which comprises the universal resource locator (url) of the data file's source address.

The DATAID thus provides a data identifier or means to identify the document in a world-wide-web context, and this is then included in the request which the client terminal generates and sends to the data storage system 18 for a copy of that data file's content to be stored on the data storage server 18.

In one embodiment, the storage request generated by client terminal 12 is sent to a first storage provider's computing platform shown in Figure 1 as server 18. Server 18 processes the received request to determine if an index entry exists for the DATAID indicated in the storage request in index data store 20. The DATAID index information enables a look-up (or similar data retrieval operation) to be performed on the user data store database 22 and/or the user data link list which indicates if data "content" for that DATA ID is already stored in the communal users data storage area 22.

For example, if a document matching the DATAID is already cached in the communal data storage area 22 the data storage server 18 updates the user's link list to that location. If the DATAID is not already cached in the communally accessibly users data storage database 22, the storage server 18 is configured to generate a search for another source of the document and once the document source has been determined, it generates a request which it sends to that document source to arrange for a copy to be downloaded to the generic local storage database 22 of the storage server 16 (see the previous description and Figure 3).

In this way the user is able to arrange for a back-up copy of a particular document to be stored remotely without having to up-load a copy of that document from the client terminal to the generic storage database 22.

If the request for the storage relates to data such as a document the user has created and which has not previously been stored any where else accessible by the data storage server 18, then the document needs to be sent to the data storage server 18, preferably with the remote storage request.

When the storage server 18 receives an electronic copy of a particular data file or document associated with a storage request, the storage server processes the request to extract the document and to extract or determine data label values from which a unique document identifier is generated using any suitable method known in the art. The receipt of the document also causes the server to generate a new DATAID index record for that data file, however, a check is preferably performed prior to creating a new DATAID index record to confirm from the Index Data Store that the same DATAID has not previously been stored, which would indicate that other copies of that document already exist in the local communal data storage area 22. If an index record is found to already exist, the duplicate DATAID is simply discarded as there is no need to update the index records. Instead, a new link to that DATAID storage location in the communal users data store 22 is provided in the database of user data link lists (which are indexed based on the UID).

A storage provider usually needs to download a full copy of a data file to generate the DATAID data fingerprint accurately. However, if the data file is a document this may not be necessary to download the entire data file in order to generate the document index and it could be able to calculate a document index using only a portion of the document. However this is not preferred as it introduces a higher possibility of incorrectly associating different documents with the same DATAID

In one embodiment of the invention, once the content storage server has identified a copy of the content data stored on other storage means, it generates an agent which is sent to that other storage means to verify the storage location of the document with the requested DATAID stored on the other storage means (e.g. on data source 24). The agent then reports back to the storage server the storage location for the document with that DATAID. In another embodiment of the invention, the remote data source will store documents in association with DATAIDs according to the present invention, which enables the storage server to simply associate the remote document's address with its DATAID in index database 20 in association with the requesting user or client terminal identity. This reduces document re-downloads from overloading the storage server.

Accordingly, in this embodiment, returning to Figure 1, index database 20 comprises a database of all fingerprints (DATAIDs) of all documents stored in generic local storage database 22 and if stored remotely, the source address for the document. In an exemplary embodiment of the invention, upon scanning the index database 20, the storage server 18 detects the requested document as one having a particular index entry which means it is already stored within the storage server's domain in users storage area 22.

In this embodiment, a user can send a request for storing a document even if the document is not one they have previously stored on a client terminal. The data storage server simply generates a link to the document and the link is stored for that user to use for subsequent retrieval without the user needing to previously download the content. This also enables a user to request a document but to avoid having the document requested being stored locally on the device the user has requested the download from until they wish to retrieve it. It is also possible to stream the document to the user's terminal which means that it would be possible for a user of a device with very limited local resources to read the contents of a large data file, as only those portions of the data file the user is actually consuming would remain stored locally on the user's terminal.

This embodiment thus prevents unnecessary download of an entire document the user's U1 local environment until the user wishes to consume that content. The consumption of broadband access bandwidth for off-line storage is reduced, as the content can be stored remotely by the user until perhaps they wish to generate a local copy on the client terminal 12. This means that broadband access bandwidth is only consumed when the document is being downloaded and/or streamed to that particular user.

As a further exemplary embodiment, consider a user U1 who is a customer of storage provider S who wishes to retrieve a document D3 stored on the data storage system of the invention. The user locates on the local client terminal 12 or remotely from a portal which interfaces with the data storage system the DataID or unique fingerprint of the document the user wants to retrieve. If the DataID is determined on the client device the client terminal then generates a retrieval request which is signalled to the storage provider S. The storage provider S holds a database of all fingerprints of all documents in his storage as well as a database of internet connected storage providers S2 which lists the DataIDs (or fingerprints) of documents that they store. By scanning the fingerprint database, the storage provider is able to detect if the document is already within his domain. If it is, then instead of downloading it to the user U1, the storage provide generates a link from the user's storage provider area SP U1 to the concerned document in the communal user data storage area (or equivalently the generic storage area) SP G.

The user is now able without needing to fully download the document to start consulting the document by the server 18 streaming the contents of the file stored on the server 18 in database 22 as they are consumed by the user on client terminal 12.

In one embodiment, when the storage provider data server scans the DataID Index data store (or equivalently the fingerprint database), the server detects that the document is available off-site from one of the peer data storage providers to which the data storage server 18 is connected via communications network 16. In this embodiment, the storage provider downloads a copy of the document to the local user data store 22 and generates a link to it in the user's link list storage area SP U1. This later embodiment prevents the user from downloading a document in its entirety to the user's U1 local environment instead a peer-to-peer connection is provided in the internet core.

Through this method the consumption of broadband access for off-line storage is limited, and the consumption of broadband access is on demand when consuming the document (reading/streaming/etc.)

In another embodiment of the invention, the data storage server 18 determines that the DATAID relates to content which is stored on a remote data storage area or data source 24 for which authorisation is required to retrieve a copy of the content. In this case, the data storage server 18 may further request authentication information from the user before updating that user's link list to include a link to the remote data source 24 for use in authenticating any subsequent data retrieval.

The DATAID or data/document fingerprint which uniquely identifies the content of a data file may be generated by performing a checksum or hash algorithm on the content. However, the best mode of the invention determines the data content uniquely using a fingerprinting technique such as those proposed herein above in the prior art which uniquely identify the content data of a data file by the content data and the characteristics of the content data.

Where a request is received to store data on the server from a user, the request is processed first by the server to locate a duplicate copy of the data before the user uploads their content data to the server. The server determines the fingerprint of the data the user wishes to store preferably by processing the request to extract the identifier from the request. If a duplicate copy is located by the server, the user's storage area contains a link to the address of the duplicate copy which the user can access to retrieve a copy of their data without having to upload any of the content data from their client terminal.

By determining the fingerprint of the data on the user's client terminal, where the content is premium content, the distributor of the content which receives a request to provide a copy to the storage server is able to determine that the user is authorised to request such a copy as the user's request contains a fingerprint for that data file. In one embodiment, a characteristic of the content data includes an authorisation code for the user.

In this way, the invention eliminates the need for a user to upload data to a remote data storage server facility which is accessible via a connection over an access communications network link when the data to be uploaded comprises data which the data storage facility can retrieve via a connection over a higher speed communications network link, for example, from a core communications network link.

Exemplary embodiments of the invention were described in detail herein above and pictorially in the accompanying drawings, however, the invention is not intended to be limited to exemplary embodiments but includes various obvious modifications and equivalent arrangements, which fall within the purview of the appended claims. Features referred to explicitly herein and in the claims may be replaced with alternative features providing functional equivalents where such functional equivalents would be known to those of ordinary skill in the art.

In the above description, references to "one embodiment," "an embodiment," "example embodiment," "various embodiments," etc., indicate that the embodiment(s) of the invention so described include a particular feature, structure, or characteristic. However, it is not necessary for every embodiment to comprise that particular feature, structure, or characteristic. Where the phrase "in one embodiment," or "in an exemplary embodiment," is referred to herein above it may or may not refer to the same embodiment as would be apparent to one of ordinary skill in the art.

Terms referring to features such as, for example, "processing," "computing," "calculating," "determining," or the like refer to an action and/or process(es) undertaken by a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

The term "computing platform" comprises one or more data processors, where a data "processor" refers to any device or portion of a device that processes electronic data from registers and/or memory to transform that electronic data into other electronic data that is capable of being stored in registers and/or memory.

One or more embodiments of the invention include apparatuses for performing the operations herein. An apparatus may be specially constructed for the desired purposes, or it may comprise a general purpose device selectively activated or reconfigured by a program stored in the device.

One or more embodiments of the invention are implemented in one or a combination of hardware, firmware, and software.

One or more embodiments of the invention are implemented as instructions stored on a machine-readable medium, which may be read and executed by a computing platform to perform the operations described herein.

The term "machine-readable medium" comprises any mechanism for storing or transmitting information in a form readable by a machine (e.g., a computer). Examples of machine-readable mediums include, but are not limited to : read only memory (ROM), random access memory (RAM), magnetic disk storage media, optical storage media, flash memory devices, and propagated electrical, optical, acoustical or other suitable digital and/or analogue signals (for example, carrier waves, infrared signals, digital signals, etc).

References to the term "computer program" and/or "computer control logic" include as appropriate references to machine code and/or executable code and/or source code which when compiled results in execution on a computing platform of the computer program.

A computer program may be provided in an electronically downloadable format or in a format which is stored in the main memory and/or secondary memory of a computing platform and/or data storage means capable of being attached and removed from a computing platform. Where a computer program is stored in one or more data storage means it comprises a computer program product. Such computer programs, when executed, are arranged to enable the computer platform or system to perform the features of the present invention as discussed herein. In particular, the computer programs, when executed, are arranged to enable a processor to implement one or more steps in a method according to an embodiment of the invention. Accordingly, such computer programs may represent data controllers of the computer system.

Another embodiment of the invention comprises a computer program product comprising a computer readable medium having control logic (computer software) stored therein. The control logic, when executed by a processor causes the processor to perform the functions of an embodiment of the invention as described herein.

In another exemplary embodiment of the invention implemented using software, the software is stored in a computer program product and loaded into a computer system using said data storage means and/or a hard drive and/or via a network communications interface card. Software implementing control logic executed by a data processor causes the processor to perform the functions of an embodiment of the invention as described herein.

In one embodiment, the computer software runs as a standalone software application program running atop an operating system. Alternatively, it is integrated into an operating system of the computing platform.

In yet another embodiment, the invention is implemented primarily in hardware using for example, but not limited to, hardware components such as application specific integrated circuits (ASICs), field programmable gateways (FPGAs) or one or more state machines, etc. Implementation of the hardware state machine so as to perform the functions described herein will be apparent to persons skilled in the relevant art(s).

In another exemplary embodiment, the invention is implemented primarily in firmware. In yet another exemplary embodiment, the invention is implemented using a combination of any of, e.g., but not limited to, hardware, firmware, and software, etc.

The embodiments and examples discussed herein are non-limiting examples. The embodiments of the invention described in detail herein above form exemplary embodiments only and it will be apparent to those skilled in the art that changes and modifications may be made without departing from the spirit and scope of the invention, for example, in its broader aspects. The embodiments of the invention as defined in the claims are intended to cover all such changes and modifications as fall within the true spirit of the invention.

## Claims

1. A data storage system comprising:
receiving means to receive a storage request for a data file from a requesting entity, the storage request being associated with an identifier for the requesting entity;
processing means to determine a first data identifier for the data file for which storage is requested, said first identifier uniquely characterising the content and content characteristics;
comparison means to compare the first data identifier with one or more other data identifiers stored on said data storage system; and
data storage means to store in association with said identifier for the requesting entity, a link to a storage location of data previously stored in said data storage system in the event of a match for the first data identifier with one of said one or more other data identifiers being determined by said comparison means.

2. A system as claimed in claim 1, wherein said storage request comprises said first data identifier and said means to determine said first data identifier processes said request to extract said first data identifier.

3. A system as claimed in claim 1, wherein said storage request comprises one or more data label characteristics and associated values; and wherein said storage system further comprises means to generate said first data identifier from said data label characteristics.

4. A system as claimed in any previous claim, wherein the link to a storage location points to a location in memory controllable by said storage system.

5. A system as claimed in any one of previous claims 1 to 3, wherein the link to a storage location points to a location in memory controllable by another entity.

6. A method of managing a data storage system, the method comprising:
receiving a storage request for a data file from a requesting entity, the storage request being associated with an identifier for the requesting entity;
determining a first data identifier for the data file for which storage is requested, said first identifier uniquely characterising the content and content characteristics;
comparing the first data identifier with stored one or more other data identifiers; and
in the event of a match for the first data identifier with one of said one or more other data identifiers being determined by said comparison,
storing in association with said identifier for the requesting entity a link to a storage location of previously stored data.

7. A method as claimed in claim 6, wherein said storage request comprises said first data identifier and the method further comprises processing said request to extract said first data identifier.

8. A method as claimed in claim 6, wherein said storage request comprises one or more data label characteristics and associated values and the method further comprises:
generating said first data identifier from said data label characteristics.

9. A method as claimed in any previous claim, wherein the storing step stores the link to a storage location which points to a location in memory controllable by said storage system.

10. A method as claimed in any one of previous claims 6 to 8, wherein said storing step stores the link to a storage location which points to a location in memory controllable by another entity.

11. A computer terminal comprising:
means to generate a request for storing a document on a data storage system as claimed in any one of claims 1 to 5.

12. A suite of one or more computer programs arranged in use when executed loaded on appropriate computer platforms to implement steps in a method as claimed in any one of claims 6 to 10.
